# EUROPÄISCHE PATENTSCHRIFT

(11) **EP 1 708 412 B1**
(45) Veröffentlichungstag und Bekanntmachung des Hinweises auf die Patenterteilung: **02.01.2019**
(21) Anmeldenummer: 06006398.9
(22) Anmeldetag: 28.03.2006
(51) Int. Cl.: H04L 12/14

(54) **Verfahren und System zur Vergebührung von Anwendungen und dem damit verbundenen Datenverkehr in einem Funk-Kommunikationssystem**
Method and system for the charging of applications and the associated data traffic in a radio communication system
Procede et système pour le remplissage des applications et des données associées trafiquent d'un système de radiocommunication

(30) Priorität: 30.03.2005 DE 102005014538
(43) Veröffentlichungstag der Anmeldung: 04.10.2006
(73) Patentinhaber: Vodafone GmbH, 40549 Düsseldorf (DE)
(72) Erfinder: Purkop, Thomas, 50259 Pulheim (DE)
(74) Vertreter: Müller, Thomas

(56) Entgegenhaltungen:
- EP-A- 1 296 481
- WO-A-03/025809
- US-A1- 2005 021 351
- HENRIKSON LUCENT TECHNOLOGIES E: "Private SIP Extension for Mobile Charging Information; draft-henrikson-sip-charging-information-0 4.txt;" IETF STANDARD-WORKING-DRAFT, INTERNET ENGINEERING TASK FORCE, IETF, CH, Nr. 4, Juni 2002 (2002-06), XP015014229 ISSN: 0000-0004
- AI-CHUN PANG ET AL: "A study on SIP session timer for wireless voip" WIRELESS COMMUNICATIONS AND NETWORKING CONFERENCE, 2005 IEEE NEW ORLEANS, LA, USA 13-17 MARCH 2005, PISCATAWAY, NJ, USA,IEEE, 13. März 2005 (2005-03-13), Seiten 2306-2311, XP010791537 ISBN: 0-7803-8966-2

## Beschreibung

Die vorliegende Erfindung betrifft ein Verfahren zur Vergebührung von Anwendungen und/oder dem damit verbundenen Datenverkehr in einem Funk-Kommunikationssystem sowie ein System zur Vergebührung von Anwendungen und / oder dem damit verbundenen Datenverkehr.

Bei modernen Funk-Kommunikationssystemen kann ein mobiles Endgerät über ein Zugangsnetzwerk mit einem Kernnetzwerk verbunden werden. Hierbei kann das Zugangsnetz ein GPRS (General Packet Radio Service) oder ein UMTS-Netz sein. In dem Kernnetzwerk kann ein Dienstenetzwerk (z.B. ein IP-Mulitmedi-Subsystem (IMS)) integriert sein.

Bei diesen Mobilfunknetzen besteht die Möglichkeit eine unmittelbare Verbindung zwischen zwei oder mehr Endgeräten (Peer-to-Peer) herzustellen. So können beispielsweise Spiele oder andere Anwendungen, die auf einem mobilen Endgerät liegen ausgeführt werden, wobei lediglich der Datenverkehr, der für die Aktivierung und Ausführung der Anwendung notwendig ist, über das Kernnetzwerk übermittelt wird. Diese Peer-to-Peer-Anwendungen können über das Dienstenetzwerk des Kernnetzwerkes verwaltet werden (IMS Peer-to-Peer).

Bei solchen IMS Peer-to-Peer Anwendungen ist es, wie bei anderen Anwendungen in einem Kommunikationsnetzwerk, wünschenswert, diese und den damit verbundenen Datenverkehr für unterschiedliche Nutzungsbedingungen mit unterschiedlichen Gebühren beaufschlagen zu können. Bei einer IMS Peer-to-Peer-Anwendung ist kein Anwendungsserver zwischengeschaltet, der detaillierte Informationen über die genauen Informationen des derzeitigen Dienstezustand, den der Nutzer verwendet, geben kann. Diese Informationen sind aber beispielsweise zur Vergebührung der Anwendung und/oder zur Vergebührung des durch Anwendungssitzungen oder die Anwendung selber hervorgerufenen Datenverkehrs notwendig. Somit müssen für IMS Peer-to-Peer Anwendungen die benötigten Informationen dem Netzwerk und insbesondere den Vergebührungseinheiten durch andere Mechanismen zur Verfügung gestellt werden.

Es ist beispielsweise möglich, Informationen, wie beispielsweise die medienspezifischen Angaben, insbesondere das verwendete Medium oder die verwendete Medienkombination, als Grundlage für die Vergebührung zu verwenden. Die medienspezifischen Angaben können in einer SDP(Session Description Protocol)-Nachricht, die beispielsweise in einem SIP (Session Initiation Protocol)-Signal, das zur Initiierung einer Anwendung verwendet werden kann, enthalten sein.

In der US 2005/0021351 A1 ist weiterhin eine Vergebührung in einem Kommunikationssystem beschrieben. Das Verfahren umfasst die Herstellung einer Kommunikationssitzung zwischen einer ersten und einer zweiten Partei, indem von der ersten Partei, die einer ersten Vergebührungseinheit zugeordnet ist, eine Nachricht an die zweite Partei, die einer zweiten Vergebührungseinheit zugeordnet ist, gesandt wird, mit der die zweite Partei eingeladen wird an der Kommunikationssitzung teilzunehmen. Bei der Antwort werden von der zweiten Partei Angaben über die zweite Vergebührungseinheit übermittelt. Diese Angaben werden von der ersten Partei an die erste Vergebührungseinheit übermittelt. Aufgrund dieser Angaben können die erste und die zweite Vergebührungseinheit miteinander kommunizieren.

Weiterhin ist in "Private SIP Extension for Mobile Charging Information; draft-henrikson-sip-charging-information-04.txt;" Henrik Lucent Technologies; IEFT Standard-working-draft; Internet Engineering Task Force; IEFT,CH, Nr. 4; Juni 2002 (2002-06), XP015014229, eine Erweiterung des SIP-Headers um P-Charging-Function-Addresses und P-Charging-Vector beschrieben. Durch die Vergebührungsfunktionsadresse wird die zuständige Vergebührungseinheit bezeichnet. Durch den Vergebührungsvektor kann Korrelationsinformation, insbesondere IMS-Vergebührungsidenfizierung (ICID), Inter Operator Identifizierung (IOI) und Zugangsnetzwerk-Vergebührungsinformationen übermittelt werden.

Der Nachteil dieser Vergebührungssysteme liegt darin, dass lediglich die jeweils zuständige Vergebührungseinheit angegeben wird und eine über die Differenzierung betreffend das Übertragungsmedium hinausgehende Unterscheidung bei der Vergebührung von Anwendungen und dem dadurch hervorgerufenen Datenverkehr nicht möglich ist. Eine solche Unterscheidung kann aber für den Netzwerkbetreiber erforderlich sein, da die verwendeten Medien oder Medienkombinationen in einigen Fällen nicht ausreichen um eine geeignete Gebühr zu ermitteln.

Aufgabe der vorliegenden Erfindung ist es daher ein Verfahren zur Vergebührung von Anwendungen und dem damit verbundenen Datenverkehr in einem Funk-Kommunikationssystem zu schaffen, die dem Betreiber eines Kommunikationsnetzes größere Freiheiten bei der Vergebührung einräumen.

Der Erfindung liegt die Erkenntnis zugrunde, dass diese Aufgabe realisiert werden kann, indem der Anwendung ein Kennzeichen zugeordnet wird, die Zusatzinformationen zu der Anwendung enthält.

Die Aufgabe wird durch ein Verfahren mit den Merkmalen nach Anspruch 1 und 12 und ein System mit den Merkmalen nach Anspruch 11 gelöst. Vorteile und Merkmale, die bezüglich des Verfahrens beschrieben werden, gelten - soweit anwendbar - entsprechend für das erfindungsgemäße System und umgekehrt.

Gemäß einem ersten Aspekt betrifft die Erfindung somit ein Verfahren zur Vergebührung von Anwendungen und / oder dem damit verbundenen Datenverkehr in einem Funk-Kommunikationssystem, das zumindest ein Zugangsnetzwerk und Kernnetzwerk mit einem Dienstenetzwerk umfasst, wobei der Datenverkehr über ein dem Kernnetzwerk zugeordneten Zugangsnetzwerk übertragen wird. Das Verfahren zeichnet sich dadurch aus, dass die Anwendung mit einer Kennzeichnung versehen wird, die zumindest eine von dem für die Ausführung der Anwendung genutzten Übertragungsmedium unabhängige Information beinhaltet, die Auskunft über den Ort gibt, von dem die Anwendung auf das mobile Endgerät übertragen wurde.

Der Ort von dem die Anwendung auf das mobile Endgerät übertragen wurde, wird im Folgenden auch als Herkunft der Anwendung bezeichnet. Dieser Ort kann insbesondere ein Anwendungs-Download-Server sein, der einem Netzwerkbetreiber zugeordnet ist. Der Zugriff für den Nutzer wird in der Regel durch ein Portal bereitgestellt, über das der Nutzer die Dienste eines Netzwerkbetreibers erhalten kann.

Das Dienstenetzwerk kann beispielsweise ein IMS sein. Das Zugangsnetzwerk kann ein GPRS-Netzwerk oder UMTS-Netzwerk darstellen.

Da eine Kennzeichnung beziehungsweise Kennung verwendet wird, die zumindest eine von dem Übertragungsmedium unabhängige Information beinhaltet, wird es möglich die gleichen Medien oder Medien-Kombinationen, die für eine Anwendungssitzung verwendet werden, beziehungsweise den mit der Sitzung verbundenen Datenverkehr, mit unterschiedlichen Gebühren zu beaufschlagen. Die unterschiedlichen Gebühren können sowohl hinsichtlich des Zugriffs, insbesondere dem Zugriff auf das Dienstenetzwerk, als auch hinsichtlich der Anwendungs-Sitzung selber erhoben werden. Auf diese Weise wird dem Netzwerkbetreiber eine größere Flexibilität bei der Vergebührung von Anwendungen und Datenverkehr betreffend diese Anwendungen eingeräumt.

Indem die Kennzeichnung Auskunft über die Herkunft der Anwendung gibt, kann zwischen Anwendungen, die von dem Netzwerkbetreiber oder einer dritten Partei, die eine Vereinbarung mit dem Netzwerkbetreiber geschlossen hat, stammen und Anwendungen, die von einer dritter Partei, die keine Vereinbarung mit dem Netzwerkbetreiber geschlossen hat, stammen, unterschieden werden. Die erstgenannte Variante wird im Folgenden auch als on-net bezeichnet und die zweite Variante als off-net.

Eine Anwendung im Sinne dieser Erfindung kann eine IP-basierte Anwendung, beispielsweise ein Spiel, ein Chat, Streaming, Voice/Video over IP und dergleichen, sein.

Die Kennzeichnung, die im Folgenden auch als Kennung oder ID bezeichnet wird, kann aus einer reinen alphanumerischen Zeichenfolge bestehen, die die Anmeldung identifiziert. Zusätzlich kann die Kennzeichnung eine Angabe über den Entwickler der Anwendung enthalten. Als Angabe über den Entwickler der Anwendung kann beispielsweise der FQDN (Fully Qualified Domain Name) des Entwicklers dienen.

Vorzugsweise wird die Kennzeichnung als Teil eines Anfragesignals zum Aufbau einer Kommunikationsverbindung übermittelt. Eine Peer-to-Peer-Anwendung, insbesondere eine IMS Peer-to-Peer-Anwendung, wird in der Regel durch Senden eines Anfragesignals, beziehungsweise einer Anfragenachricht an eine Dienstesteuerfunktion (AF (Application Funktion), beispielsweise CSCF (Call Session control function) von dem mobilen Endgerät, das im Folgenden auch als UE (User Equipment) bezeichnet wird, initiiert. Diese Anfragenachricht kann in einem SIP(Session-lnitiating-Protocol)-Signal an die Dienstesteuerfunktion übermittelt werden. Indem eine erfindungsgemäße Kennzeichnung der Anwendung in einer solchen Anfragenachricht enthalten ist, kann dem Datenverkehr, der durch die Ausführung der Anwendung hervorgerufen wird, bereits bei deren Initialisierung eine geeignete Gebühr beziehungsweise Vergebührungsrichtlinie zugeordnet werden.

Auch für die Vergebührung der Anwendung kann die in einer Anfragenachricht enthaltene Kennzeichnung hilfreich sein. Wird für den Zugriff auf eine Anwendung eine entsprechende Anfragenachricht gesandt, so kann diese an das mobile Endgerät übermittelt werden und aufgrund der Kennzeichnung eine für diese Anwendung zu erhebende Gebühr festgelegt werden.

Die Kennzeichnung kann wahlweise den Titel oder ein Attribut eines Anfragesignals darstellen. Insbesondere kann die Kennzeichnung in dem Titel (Header, insbesondere P-Header) eines SIP-Signals verwendet werden, was eine schnellere Erkennung der Herkunft der Anwendung gewährleistet. Zudem kann die Kennzeichnung, die in dem Titel enthalten ist, leicht von der Anfrage getrennt, das heißt extrahiert werden. Alternativ oder zusätzlich kann die Kennzeichnung als ein Attribut des Anfragesignals, beispielsweise als eines der Sitzungsattribute einer SDP-Nachricht übermittelt werden.

Die so an einer Dienstesteuerfunktion empfangene Kennzeichnung kann einer Komponente des Dienstenetzwerkes zur Ermittlung der für die Anwendung und/oder Anwendungssitzung zu erhebenden Gebühr übermittelt werden. Die Komponente, an die die Kennung weitergeleitet wird, kann beispielsweise das so genannte Online Charging System (OCS) sein, das für die Vergebührung von der Anwendung zuständig ist.

Zusätzlich oder alternativ kann die Kennzeichnung der Anwendung einer Komponente, insbesondere einer Richtlinienfunktion, wie beispielsweise der CRF/PDF (Charging Rule Function/Policy Decision Function), des Kernnetzwerkes zur Ermittlung der für den Datenverkehr, der durch die Anwendung und/oder Anwendungssitzung verursacht wird, zu erhebenden Gebühr übermittelt wird.

In dieser Komponente (CRF/PDF) des Kernnetzwerkes kann durch die Kennzeichnung der durch die Anwendung und/oder Anwendungssitzung hervorgerufene Medienstrom einer Nutzerdaten-Verkehrs-Kategorie zugeordnet werden, anhand derer die zu erhebenden Gebühr für den Datenverkehr bestimmt wird.

Dabei ist es wichtig, dass die CRF/PDF und OCS den Zusammenhang verstehen, in dem das individuelle Medium genutzt wird. Für diese Zuordnung kann die erfindungsgemäße Kennzeichnung dienen. Insbesondere können CRF/PDF Implementationen vorgesehen werden, die eine geeignete Benutzerebene-Verkehrskategorie (User Plane Traffic Category) mit dem OCS assoziiert, um die IMS Peer-to-Peer Anwendung geeignet einzustufen zu können.

Um die Sicherheit gegen Missbrauch zu erhöhen kann die Kennzeichnung authentifiziert werden. Hierzu kann die Kennung beispielsweise bei der Übermittlung an das mobile Endgerät verschlüsselt werden. Es können bekannte Authentifizierungsmechanismen verwendet werden. Die Authentifizierung kann beispielsweise bei Empfang einer Anfragenachricht an dem Dienstenetzwerk erfolgen.

Die Kennzeichnung der Anwendung kann der Anwendung bei der Übermittlung an ein mobiles Endgerät (UE) zugeordnet werden. Die Kennzeichnung kann sowohl on-net-Anwendungen als auch off-net-Anwendungen zugefügt werden und bei der Ausführung der Anwendung oder dem Zugriff auf das Netzwerk des Betreibers anhand der jeweiligen Kennung einer der beiden Gruppen zugeordnet werden. Zum Zeitpunkt der Übermittlung der Anwendung wird offensichtlich, dass diese Anwendung als Peer-to-Peer Anwendung verwendet werden wird. Somit kann die Kennzeichnung ausschließlich an IMS Peer-to-Peer-Anwendungen vergeben werden. Alternativ kann die Kennung auch bei der Entwicklung der Anwendung integriert werden.

Gemäß einem weiteren Aspekt der Erfindung betrifft diese ein System zur Vergebührung von Anwendungen und/oder dem dadurch verursachten Datenverkehr in einem Funk-Kommunikationssystem. Das System zeichnet sich, dadurch aus, dass eine Komponente (CSCF) des Dienstenetzwerkes (IMS) eine Erkennungseinheit zum Erkennen einer Kennzeichnung einer Anwendung, die Auskunft über den Ort gibt, von dem die Anwendung auf das mobile Endgerät übertragen wurde, aufweist.

Durch diese Erkennungseinheit, die vorzugsweise in der Komponente des Dienstenetzwerkes vorgesehen ist, mit der ein mobiles Endgerät als erstes kommuniziert, kann die Kennung aus der Anfragenachricht oder anderen Nachricht, mit der die Kennung übertragen wird, wird zu einem frühen Zeitpunkt ermittelt, ob eine Kennung der Anwendung vorliegt und eine entsprechende Verarbeitung der Kennung initiiert werden. Wird beispielsweise in der Erkennungseinheit das vorliegen einer Kennung in einer Anfragenachricht erfasst, so kann diese aus der Nachricht extrahiert werden und an geeignete Komponenten in dem Dienstenetzwerk und/oder dem Kernnetzwerk übermittelt werden. Die Kennung kann von der Nachricht getrennt oder aus dieser ausgelesen werden. Alternativ ist es möglich, dass die Erkennungseinheit beim Erfassen einer Kennung die Kennung zusammen mit weiteren Informationen, wie beispielsweise Medieninformationen an die geeigneten Komponenten leitet.

Die extrahierte Kennzeichnung wird vorzugsweise an eine Komponente (CRF/PDF) zur Auswahl einer geeigneten Vergebührungsregel und/oder an eine weitere Komponente (OSC) zur Festlegung des Vergebührungsschemas für die Anwendung, geleitet.

In diesen Komponenten können geeignete Regeln hinterlegt sein, die eine Zuordnung der Kennung und damit der Anwendung und/oder dem Datenverkehr zu bestimmten Gebühren oder Gebührengruppen ermöglichen.

Die Komponente (CSCF) des Dienstenetzwerkes (IMS), die die Erkennungseinheit aufweist, ist mit zumindest einer Komponente, insbesondere einem Eingangsknoten, wie beispielsweise dem Netzübergang-Netzknoten (GGSN) des Kernnetzwerkes verbunden. Auf diese Weise kann dem Kernnetzwerk die Kennung übertragen werden.

Die Komponente (GGSN) des Kernnetzwerkes oder eine damit verbundene weitere Komponente (CRF/PDF, OCS) weist vorzugsweise eine Vergleichseinheit zum Vergleich von Kennzeichnungen von Anwendungen mit gespeicherten Daten zur Ermittlung einer anzuwendenden Vergebührungsrichtlinie auf. Diese Vergleichseinheit kann sich einer Tabelle bedienen, in der die Vergebührungsrichtlinien oder Gebührenklassen, speziellen Anwendungen zugeordnet sind. Durch die Vergleichseinheit kann dann die anzuwendende Regel oder die geeignete Gebühr ermittelt werden. Die Einträge in die Tabelle können dynamisch aktualisiert werden, indem bei jedem Zugriff auf eine Anwendung und insbesondere beim Herunterladen der Anwendung auf ein mobiles Endgerät die Kennung dieser Anmeldung der Liste zugefügt wird. Alternativ kann die Tabelle von dem Netzwerkbetreiber regelmäßig aktualisiert werden.

Das System kann einen Downloadserver umfassen, wobei dieser eine Kennzeichnungseinheit aufweist, in der diese einer Anwendung eine Kennzeichnung zuordnet, die zumindest Auskunft über den verwendeten Download-Server gibt. Hierdurch wird eine Unterscheidung zwischen on-net-Anwendungen und off-net-Anwendungen ermöglicht.

Das erfindungsgemäße System ist zur Ausführung des erfindungsgemäßen Verfahrens ausgelegt.

Die Erfindung wird im Folgenden erneut anhand der beiliegenden Zeichnung erläutert.

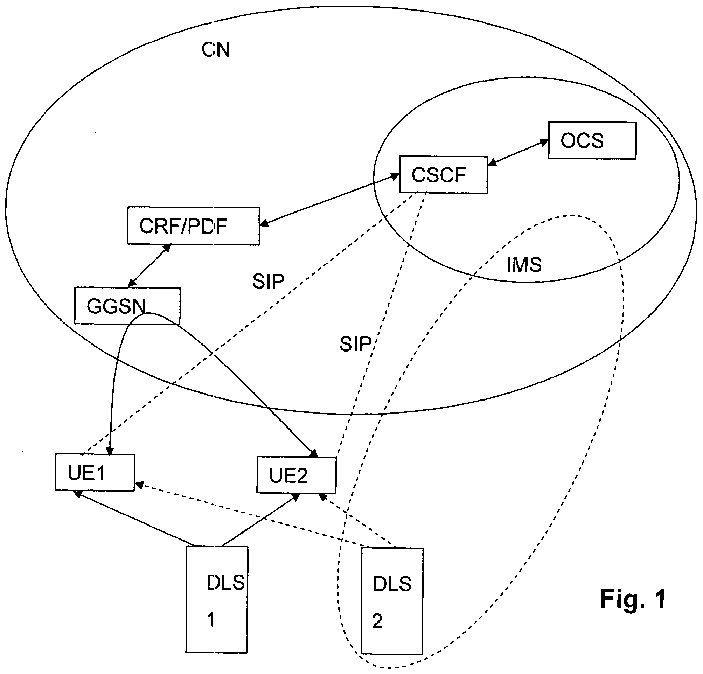

Figur 1 zeigt den schematischen Aufbau eines Kommunikationssystems für das erfindungsgemäße Verfahren.

Der grundsätzliche Aufbau von Kommunikationsnetzen der dritten Generation ist hinreichend bekannt, so dass in der Figur lediglich die für die Erfindung wesentlichen Komponenten dargestellt sind und deren Funktion nur bezüglich der Erfindung beschrieben werden.

Das Kommunikationssystem umfasst ein Kernnetzwerk, das in der dargestellten Ausführungsform, sowie ein IMS. Beim Aufbau einer Peer-to-Peer Verbindung wird, wie in der Figur durch den durchgezogenen Pfeil dargestellt, eine Verbindung zwischen zwei mobilen Endgeräten UE1 und UE2 hergestellt. Diese kann durch eine SIP-Nachricht initiiert werden, die von einem der mobilen Endgeräte an das IMS gesandt wurde. Nachdem die Sitzung hergestellt wurde und die Anwendung zwischen den mobilen Endgeräton UE1 und UE2 ausgeführt wird, erfolgt der Datenverkehr über das Kernnetzwerk, insbesondere über die den Netzübergang-Netzknoten GGSN.

Die Anwendung für eine solche Sitzung kann von einem Download-Server DLS1, DLS2 herunter geladen werden. In der Figur sind zwei Download-Server (DLS1, DLS2) gezeigt, wobei einer DLS2 dem Netzwerk CN zugeordnet ist, wohingegen der andere DLS2 separat von dem Netzwerk CN ist. Der erste Fall kann beispielsweise den on-net-Fall repräsentieren, in dem die Anwendung von einem Portal, das von dem Netzwerkbetreiber des Kernnetzwerk CN unterhalten wird, herunter geladen wird. Die über dieses Portal herunter geladenen Anwendungen, werden entweder von dem Netzwerkbetreiber selber oder von einer Dritten Partei nach Absprache mit dem Netzwerkbetreiber zur Verfügung gestellt. Der zweite Fall repräsentiert die off-net-Konstellation, in der die Anwendung von einem Download-Server DLS 1 herunter geladen wird, die keine Vereinbarung mit dem Netzwerkbetreiber besitzt.

Diese beiden Fälle sollen hinsichtlich der zu erhebenden Gebühren unterschiedlich behandelt werden.

Während eine on-net Anwendung und der dadurch verursachte Datenverkehr vorzugsweise mit einer Null-Gebühr für den Zugriff und einer zeitbasierenden Sitzungs-Gebühr behaftet sein sollte, sollte die off-net-Anwendung nach dem Volumen vergebührt werden.

Mit der erfindungsgemäßen Kennzeichnung wird dies realisiert.

In einer Ausführungsform kann beim Herunterladen der Anwendung von dem Download-Server DLS1, DLS2 der Anwendung eine Kennung zugefügt werden.

Diese Kennzeichnung kann einfach durch den FQDN des Entwicklers (z.B.developer.example.com) und einem 64 bit oder 128 bit Token zusammengesetzt sein. So kann beispielsweise eine Kennzeichnung
Developer1.example.com FFGY0123498HH99
verwendet werden.

Bei der Herstellung der Anwendungssitzung mit dem IMS wird diese Kennung von dem mobilen Endgerät an die IMS, insbesondere die CRCF übermittelt. Hierbei kann die Kennzeichnung der IMS-Peer-to-Peer-Anwendung als ein Sitzungsattribut in der SDP oder als Titel (Header, P-Header) transportiert werden.

Von dem CRCF kann aufgrund der Kennzeichnung eine Quotenanfrage an das Online-Charging-System gerichtet werden und die Kennzeichnung an die CRF/PDF geleitet werden. In der CRF/PDF kann die für die Anwendung geeignete Verkehrskategorie, die mit der genutzten Medienkomponente zusammenhängt, aufgrund der Kennzeichnung festgelegt werden. In dem OCS kann die Kennzeichnung verwendet werden, um das für diese Anwendung geeignete Gebührensystem festlegen zu können.

## Patentansprüche

1. Verfahren zur Vergebührung von Anwendungen und / oder dem dadurch verursachten Datenverkehr in einem Funk-Kommunikationssystem, das zumindest ein Zugangsnetzwerk, GPRS, und Kernnetzwerk, CN, mit einem Dienstenetzwerk, IMS, umfasst, wobei der Datenverkehr über ein dem Kernnetzwerk, CN, zugeordneten Zugangsnetzwerk übertragen wird, **dadurch gekennzeichnet, dass** die Anwendung mit einer Kennzeichnung, ID, versehen wird, die zumindest eine von dem für die Ausführung der Anwendung genutzten Übertragungsmedium unabhängige Information beinhaltet, die Auskunft über den Ort gibt, von dem die Anwendung auf das mobile Endgerät übertragen wurde.

2. Verfahren nach Anspruch 1, **dadurch gekennzeichnet, dass** die Kennzeichnung einer Komponente, OCS, des Dienstenetzwerkes zur Ermittlung der für die Anwendung und/oder Anwendungssitzung zu erhebenden Gebühr übermittelt wird.

3. Verfahren nach einem der Ansprüche 1 oder 2, **dadurch gekennzeichnet, dass** die Kennzeichnung einer Komponente, CRF/PDF, des Kernnetzwerkes zur Ermittlung der für den Datenverkehr, der durch die Anwendung und/oder Anwendungssitzung verursacht wird, zu erhebenden Gebühr übermittelt wird.

4. Verfahren nach Anspruch 3, **dadurch gekennzeichnet, dass** in der Komponente, CRF/PDF, des Kernnetzwerkes durch die Kennzeichnung der durch die Anwendung und/oder Anwendungssitzung hervorgerufene Medienstrom einer Nutzerdaten-Verkehrs-Kategorie zugeordnet wird, anhand derer die zu erhebenden Gebühr für den Datenverkehr bestimmt wird.

5. Verfahren nach einem der Ansprüche 1 bis 4, **dadurch gekennzeichnet, dass** die Kennzeichnung authentifiziert wird.

6. Verfahren nach einem der Ansprüche 1 bis 5, **dadurch gekennzeichnet, dass** die Kennzeichnung der Anwendung bei der Übermittlung der Anwendung an ein mobiles Endgerät, UE, zugeordnet wird.

7. Verfahren nach einem der Ansprüche 1 bis 6, **dadurch gekennzeichnet, dass** die Kennzeichnung als Teil eines Anfragesignals zum Aufbau einer Kommunikationsverbindung übermittelt wird.

8. Verfahren nach Anspruch 7, **dadurch gekennzeichnet, dass** die Kennzeichnung den Titel oder ein Attribut eines Anfragesignals darstellt.

9. Verfahren nach einem der Ansprüche 1 bis 8, **dadurch gekennzeichnet, dass** die Anwendung auf dem mindestens einen mobilen Endgerät gespeichert ist und der mit Anwendungssitzungen verbundene Datenverkehr über das Kernnetzwerk, CN, erfolgt.

10. Verfahren nach einem der Ansprüche 1 bis 9, **dadurch gekennzeichnet, dass** ein mobiles Endgerät ausschließlich zur Aktivierung einer Anwendung mit dem Dienstenetzwerk, IMS, kommuniziert.

11. System zur Vergebührung von Anwendungen und/oder dem dadurch verursachten Datenverkehr in einem Funk-Kommunikationssystem, **dadurch gekennzeichnet, dass** eine Komponente, CSCF, des Dienstenetzwerkes, IMS, eine Erkennungseinheit zum Erkennen einer Kennzeichnung einer Anwendung, die Auskunft über den Ort gibt, von dem die Anwendung auf ein mobiles Endgerät übertragen wurde, aufweist.

12. Verfahren zum Erkennen einer Kennzeichnung einer Anwendung in einer System nach Anspruch 11, **dadurch gekennzeichnet, dass** die Komponente, CSCF, beim Empfang eines Anfragesignals eines mobilen Endgerätes, UE, in der Erkennungseinheit die Kennzeichnung von der Anwendung trennt oder ausliest.

13. Verfahren nach Anspruch 12, **dadurch gekennzeichnet, dass** die extrahierte Kennzeichnung an eine Komponente, CRF/PDF, zur Auswahl einer geeigneten Vergebührungsregel und/oder an eine weitere Komponente, OSC, zur Festlegung des Vergebührungsschemas für die Anwendung, geleitet wird.

14. System nach Anspruch 11, **dadurch gekennzeichnet, dass** die Komponente, CSCF, des Dienstenetzwerkes, IMS, die die Erkennungseinheit aufweist, mit zumindest einer Komponente, GGSN, des Kernnetzwerkes, CN, verbunden ist.

15. System nach Anspruch 14, **dadurch gekennzeichnet, dass** die Komponente, GGSN, des Kernnetzwerkes, CN, oder eine damit verbundene weitere Komponente, CRF/PDF, OCS, eine Vergleichseinheit zum Vergleich von Kennzeichnungen von Anwendungen mit gespeicherten Daten zur Ermittlung einer anzuwendenden Vergebührungsrichtlinie aufweist.

16. System nach einem der Ansprüche 11, 14 oder 15, **dadurch gekennzeichnet, dass** das System einen Downloadserver umfasst und dieser eine Kennzeichnungseinheit aufweist, in der diese einer Anwendung eine Kennzeichnung zuordnet, die zumindest Auskunft über den verwendeten Download-Server gibt.

17. System nach einem der Ansprüche 11, 14, 15 oder 16, **dadurch gekennzeichnet, dass** dieses zur Ausführung eines Verfahrens nach einem der Ansprüche 1 bis 10 ausgelegt ist.

## Claims

1. Method for charging of applications and / or the data traffic caused thereby in a radio communication system comprising at least one access network, GPRS, and core network, CN, with a service network, IMS, wherein the data traffic is transmitted via an access network which is assigned to the core network, CN, **characterized in that** the application is provided with a label, ID, which contains at least one piece of information which is independent of the transmission medium which is used for the execution of the application and which provides information about the location from which the application has been transmitted to the mobile terminal.

2. Method according to claim 1, **characterized in that** the label of a component, OCS, of the service network is transmitted for determining the fee which is to be charged for the application and/or application session.

3. Method according to anyone of claims 1 or 2, **characterized in that** the label of a component, CRF/PDF, of the core network is transmitted for determining the fee which is to be charged for the data traffic which is caused by the application and/or application session.

4. Method according to claim 3, **characterized in that** in the component, CRF/PDF, of the core network by the label the media stream which is caused by the application and/or application session is assigned to a user-data-traffic-category, by means of which the fees to be charged for the data traffic are determined.

5. Method according to anyone of claims 1 to 4, **characterized in that** the label is being authenticated.

6. Method according to anyone of claims 1 to 5, **characterized in that** the label is assigned to the application during the transmission of the application to a mobile terminal, UE.

7. Method according to anyone of claims 1 to 6, **characterized in that** the label is transmitted as part of a request signal for establishing a communication connection.

8. Method according to claim 7, **characterized in that** the label is the title or an attribute of a request signal.

9. Method according to anyone of claims 1 to 8, **characterized in that** the application is stored on the at least one mobile terminal and the data traffic which is associated with application sessions takes place via the core network, CN.

10. Method according to anyone of claims 1 to 9, **characterized in that** a mobile terminal exclusively communicates with the service network, IMS, for activating an application.

11. System for charging of applications and/or data traffic caused thereby in a radio communication network, **characterized in that** a component, CSCF, of the service network, IMS, has a detection unit for detecting a label of an application which provides information on the location from which the application has been transmitted to a mobile terminal.

12. Method for detecting a label of an application in a system according to claim 11, **characterized in that** the component, CSCF, upon receipt of a request signal of a mobile terminal, UE, in the detection unit separates or reads out the label of the application.

13. Method according to claim 12, **characterized in that** the extracted label is passed to a component, CRF/PDF, for selecting an suitable charging rule and/or to a further component, OCS, for setting the charging scheme for the application.

14. System according to claim 11, **characterized in that** the component, CSCF, of the service network, IMS, which comprises the detection unit, is connected to at least one component, GGSN, of the core network, CN.

15. System according to claim 14, **characterized in that** the component, GGSN, of the core network, CN, or a further component, CRF/PDF, OCS, connected thereto, has a comparison unit for comparing of labels of applications with stored data for determining a charging policy to be applied.

16. System according to anyone of claims 11, 14 or 15, **characterized in that** the system comprises a download server which has a marking unit, wherein it assigns a label which provides at least information on the download server which is used to an application.

17. System according to anyone of claims 11, 14, 15 or 16, **characterized in that** it is designed for carrying out a method according to anyone of claims 1 to 10.

## Revendications

1. Procédé de taxation d'applications et/ou du trafic de données causé par celles-ci dans un système de radiocommunication, qui comporte au moins un réseau d'accès, GPRS, et un réseau fédérateur, CN, avec un réseau de service, IMS, dans lequel le trafic de données est transmis par le biais d'un réseau d'accès attribué au réseau fédérateur, CN, **caractérisé en ce que** l'application est pourvue d'un identifiant, ID, qui contient au moins une information, indépendante du support de transmission utilisé pour l'exécution de l'application, qui donne des renseignements sur le lieu depuis lequel l'application a été transmise au terminal mobile.

2. Procédé selon la revendication 1, **caractérisé en ce que** l'identifiant d'un composant, OCS, du réseau de service est transféré pour la détermination de la taxe à prélever pour l'application et/ou pour la session d'application.

3. Procédé selon les revendications 1 ou 2, **caractérisé en ce que** l'identifiant d'un composant, CRF/PDF, du réseau fédérateur est transféré pour la détermination de la taxe à prélever pour le trafic de données qui est causé par l'application et/ou par la session d'application.

4. Procédé selon la revendication 3, **caractérisé en ce que**, dans le composant, CRF/PDF, du réseau fédérateur, le flux de médias causé par l'application et/ou par la session d'application est attribué par l'identifiant à une catégorie de trafic de données d'utilisateur à l'aide de laquelle la taxe à prélever est déterminée pour le trafic de données.

5. Procédé selon l'une quelconque des revendications 1 à 4, **caractérisé en ce que** l'identifiant est authentifié.

6. Procédé selon l'une quelconque des revendications 1 à 5, **caractérisé en ce que** l'identifiant est attribué à l'application lors du transfert de l'application à un terminal mobile, UE.

7. Procédé selon l'une quelconque des revendications 1 à 6, **caractérisé en ce que** l'identifiant est transféré en tant que partie d'un signal de demande pour l'établissement d'une liaison de communication.

8. Procédé selon la revendication 7, **caractérisé en ce que** l'identifiant représente le titre ou un attribut d'un signal de demande.

9. Procédé selon l'une quelconque des revendications 1 à 8, **caractérisé en ce que** l'application est enregistrée sur l'au moins un terminal mobile et le trafic de données lié aux sessions d'application a lieu par le biais du réseau fédérateur, CN.

10. Procédé selon l'une quelconque des revendications 1 à 9, **caractérisé en ce qu'**un terminal mobile communique avec le réseau de service, IMS, exclusivement pour l'activation d'une application.

11. Système de taxation d'applications et/ou du trafic de données causé par celles-ci dans un système de radiocommunication, **caractérisé en ce qu'**un composant, CSCF, du réseau de service, IMS, comprend une unité de détection destinée à la détection d'un identifiant d'une application, qui donne des renseignements sur le lieu depuis lequel l'application a été transmise à un terminal mobile.

12. Procédé de détection d'un identifiant d'une application dans un système selon la revendication 11, **caractérisé en ce que** le composant, CSCF, lors de la réception d'un signal de demande d'un terminal mobile, UE, extrait ou sépare dans l'unité de détection l'identifiant de l'application.

13. Procédé selon la revendication 12, **caractérisé en ce que** l'identifiant extrait est amené à un composant, CRF/PDF, pour sélectionner une règle de taxation appropriée et/ou à un autre composant, OSC, pour définir le schéma de taxation pour l'application.

14. Système selon la revendication 11, **caractérisé en ce que** le composant, CSCF, du réseau de service, IMS, qui comprend l'unité de détection, est relié à au moins un composant, GGSN, du réseau fédérateur, CN.

15. Système selon la revendication 14, **caractérisé en ce que** le composant, GGSN, du réseau fédérateur, CN, ou un autre composant, CRF/PDF, OCS, relié à celui-ci comprend une unité de comparaison pour comparer des identifiants d'applications à des données enregistrées en vue de la détermination d'une directive de taxation à appliquer.

16. Système selon l'une quelconque des revendications 11, 14 ou 15, **caractérisé en ce que** le système comporte un serveur de téléchargement vers l'aval et que celui-ci comprend une unité d'identifiant dans laquelle celle-ci attribue à une application un identifiant qui donne au moins des renseignements sur le serveur de téléchargement vers l'aval employé.

17. Système selon l'une quelconque des revendications 11, 14, 15 ou 16, **caractérisé en ce que** celui-ci est agencé pour l'exécution d'un procédé selon l'une quelconque des revendications 1 à 10.
